# EUROPEAN PATENT APPLICATION

(11) **EP 1 878 503 A1**
(43) Date of publication of application: **16.01.2008**
(21) Application number: 06014676.8
(22) Date of filing: 14.07.2006
(51) Int. Cl.: B01L 7/00, B01J 19/00

(54) **Temperature sensor element for monitoring heating and cooling**

(71) Applicant: Roche Diagnostics GmbH, 68298 Mannheim (DE); F.HOFFMANN-LA ROCHE AG, 4070 Basel (CH)
(72) Inventor: Savatic, Goran, 6403 Kuessnacht am Rigi (CH); Sarofim, Emad, 6332 Hagendorn (CH)

(57) **Abstract**

Subject of the present invention is a system (1,11) comprising a cartridge (1) and a device (11) for heating and cooling a mixture in a controlled manner by sensing the temperature of the mixture in said cartridge with at least one sensor element (12,13), a device for heating a cartridge comprising a chamber, a method for conducting a thermal profile in a device, and a method for amplifying nucleic acids.

## Description

### Field of the invention

Subject of the present invention is a system comprising a cartridge and a device for heating and cooling a mixture in a controlled manner, a device for heating a cartridge comprising a chamber, a method for conducting a thermal profile in a device, and a method for amplifying nucleic acids.

### Background of the invention

The invention is particularly useful in the field of health care, where reliable analysis of samples for components contained therein is needed. Chemical reactions needing heating are well known, for example from Molecular Diagnostics, where nucleic acids are known to denature, i.e. to become single stranded from a hybrid of two strands, by applying heat above the melting temperature of the hybrid. Herein, an important aspect is controlling and monitoring the heating and cooling of samples as precision in these steps is a prerequisite for the accuracy of such methods.

A method that uses reactions cycles including such denaturation steps is the polymerase chain reaction (PCR). This technology has revolutionized the field of nucleic acid treatment, particularly the analysis of nucleic acids, by providing a tool to increase the amount of nucleic acids of a particular sequence from negligible to detectable amounts. PCR is described in EP 0 201 184 and EP 0 200 362. An instrument for performing thermocycles in controlled manner on samples in tubes using heating and cooling an extended metal block is disclosed in EP 0 236 069.

Monitoring the heating and cooling of a cartridge and a reaction chamber with a thermal sensor is well known in art.

US patent application US 2003/0008286 discloses an apparatus that is made up of a plastic chip containing an array of reaction chambers. After all chambers have been filled with reagents, the chip is pressed up against a substrate, there being a set of temperature balancing blocks between the chip and the substrate. Individually controlled heaters and sensors located between the blocks and the substrate allow each chamber to follow its own individual thermal protocol while being well thermally isolated from all other chambers and the substrate. Thereby, the heater and sensor may either be on the bottom of the block not facing the reaction chamber or on top of the block and another, smaller block of high thermal conductivity being mounted on top of the first block. This arrangement of heater and sensor has the disadvantage that the temperature of the liquid in the chamber is only determined indirectly via measuring the temperature of the conductive block. Furthermore, the temperature is not determined across the full cross section of the chamber.

WO 98/38487 discloses an assembly that has a chemical reaction chamber adapted to receive a sample and allow the sample to chemically react and a thermal sleeve having heating elements for making efficient thermal contact with the reaction chamber. The temperature of the chamber may be monitored by one or more temperature sensors located on the thermal sleeve and on the trailing edge. However, this arrangement of heater and sensor has the disadvantage that the temperature is determined locally within a small section of the reaction chamber and not across the full cross section of the chamber and results of the measurement may therefore not be representative for the temperature predominating in the reaction chamber.

Thus, in the field of monitoring the temperature in reactions and/or thermal cycles involving the heating and/or the cooling of liquids commonly the temperature of the liquid is determined indirectly using thermal sensors that are measuring the temperature outside the chamber containing the sample and algorithms to interpolate and correlate the temperature measured with the thermal sensor and the temperature in the sample. An object of the present invention therefore is to provide a system and a device comprising a thermal sensor element with improved characteristics for determining the temperature in a liquid sample.

### Brief description of the drawings

Figure 1 shows cross sections through the essential components of an exemplary system (C) according to the invention comprising a cartridge (A) and a device (B).
Figure 2 displays cross sections through the essential components of an exemplary system (C), wherein the cartridge (A) contains more than one cartridge chamber for containing a mixture (2) and the device (B) comprising a first sensor element (12) and a second sensor element (13) for each chamber of the cartridge.
Figure 3 displays cross sections through two different exemplary embodiments of the device according to the invention.
Figure 4 shows the top view of various exemplary embodiments of the device.
Figure 5 exemplifies a closed-loop PID (proportional, integral, derivative) control algorithm regulation (with z-transform equations) needed to compare the temperature measured with the designated temperature.
Figure 6 shows the temperature profile set to generate the PCR curve performing PCR runs with the commercially available LightCycler ParvoB19 Kit (Roche Diagnostics GmbH, Germany).
Figure 7 shows the result of two experiments using the LightCycler ParvoB19 Kit.

In Figure 8 an example for all required temperatures for the regulation algorithm is shown.

### Summary of the invention

A first subject of the invention is a system for heating and cooling a mixture in a controlled manner comprising a cartridge and a device,
said cartridge at least comprising
- a chamber for containing said mixture, and
- a contact surface for contacting said device having a chamber contact surface and a cartridge body contact surface
   and said device at least comprising
- a first substantially flat temperature sensor element,
- a heater layer, and
- a heat conducting substrate
characterized in that said sensor element is positioned on the surface of said device pointing towards said contact surface of said cartridge permitting the interaction of said cartridge body contact surface or said chamber contact surface with said first sensor element.

A second subject of the invention is a device for heating a cartridge comprising a chamber in a controlled manner, said device comprising
- at least one substantially flat temperature sensor element located in parallel to a cross section of said chamber,
- a heat conducting substrate, and
- a heater layer,
characterized in that said first sensor element is positioned on the surface of said heat conducting substrate pointing towards said chamber of said cartridge permitting the interaction of said cartridge with said first sensor element.

A third subject of the invention is a method for conducting and controlling a thermal profile in a system comprising
- heating a cartridge containing a mixture in a chamber with a device in a system according to any one of claims 1 to 14, and
- controlling the heating process and the temperature of said mixture using said first and/or second sensor element of said device.

A fourth subject of the invention is a method for amplification of nucleic acids using a system according to any one of claims 1 to 14 comprising
a) providing a sample containing the nucleic acids in the chamber of said cartridge
b) subjecting said sample in said chamber of said cartridge to thermocycles.

A fifth subject of the invention is an instrument for performing biological assays including heating a sample in a controlled manner at least comprising a system according to any one of claims 1 to 14, wherein said device is positioned within the instrument in such a manner to permit a defined and predetermined physical interaction with said cartridge, when said cartridge is inserted into the instrument and brought into contact with said device.

### Detailed description of the invention

Methods for the amplification of nucleic acids are known. They are intended to create a large amount of nucleic acids based upon the initial presence of a target nucleic acid serving as a template for the activity of an enzyme capable of replicating a sequence of bases within said target nucleic acid. The replicon itself is used as a target for a replication of a sequence, preferably the sequence of bases that were already subject of the first replication. Thus, a huge number of nucleic acids having an identical sequence are created.

A particularly well established method for the amplification of nucleic acids is the polymerase chain reaction (PCR) method as disclosed in EP 0 200 362. In this method, a reaction mixture is subjected to a repeated cycle of thermal profiles, the temperatures being adapted to effect annealing primers to the target nucleic acid, extending said annealed primer using said target nucleic acid as a template and separating the extension product from its template.

In a first step, a liquid containing the nucleic acids is provided. The liquid may be any liquid that contains a nucleic acid to be amplified. Furthermore, this liquid contains the reagents necessary for the amplification of the nucleic acids. Those reagents are well known for each amplification method and preferably include an agent for extending a primer, preferably a template dependent DNA- or RNA- polymerase and building blocks that should be attached to the primer for extension, e.g. nucleotides. Furthermore, the mixture will contain reagents useful to establish conditions for the extension reaction, like buffers and cofactors, e.g. salts, of the enzyme used.

In further steps, the temperature is adjusted to allow for denaturation of double stranded nucleic acids, annealing of primers to the single strands, and extension of the primers annealed. The extension reaction will be done at a temperature where the polymerase is active. Preferably, a thermostable and thermoactive polymerase is used. The double strands formed are separated by denaturation as indicated above.

In diagnostic applications of PCR methods, in particular in rapid PCR methods, high demands are put on precision and accuracy of these methods and the instruments for performing such methods. Therefore, on the side of the instruments the accuracy of the sample temperature in the sample chamber and, in particular in rapid PCR methods, a fast, sufficient and precise heating and/or cooling of the sample should be closely monitored during repeated cycles of thermal profiles by the use of thermal sensors.

The present invention provides a system, a device, an instrument and methods having improved properties for monitoring the temperature in a liquid mixture. For this, the mixture, e.g. comprising nucleic acids, is contained in a chamber of a cartridge having contact or being brought into contact with a device and the device being an object for performing cooling and heating sequences comprising at least one thermal sensor for monitoring these cooling and heating sequences.

Such a system for heating and cooling a mixture in a controlled manner according to the invention at least comprises a cartridge and a device. The cartridge and the device are formed and moved relatively to each other in such a manner to permit a defined and predetermined physical interaction of the cartridge and the device.

Herein, the cartridge comprises a chamber for containing the mixture and a contact surface for contacting the device. A part of the contact surface functions as a chamber contact surface. The chamber contact surface of the device is located at the position, where the predetermined physical interaction of the cartridge chamber and the device takes place. Another part of the contact surface functions as a cartridge body contact surface. The cartridge body contact surface of the device mediates the physical interaction of the device with the body and/or the scaffold of the cartridge and is located outside the chamber contact surface.

The device being an object for performing cooling and heating sequences at least comprises a first substantially flat temperature sensor element, a heat conducting substrate and a heater layer. The heater layer according to the invention comprises a substantially flat resistance heater. Such heaters are generally known in the art. The heater layer preferably is made of material with a high electrical resistance, e.g. selected from the group consisting of ruthenium oxide, silver, copper, gold, platinum, palladium or other compatible metals, electrical conductors or alloys thereof. Most preferred is the material ruthenium oxide. The layer preferably has a thickness of between 10 µm and 30 µm, more preferred between 15 µm and 20 µm. The heating layer is preferably prepared by coating or screen printing a paste of the material in particular form and heating said composite to a temperature sufficient for the particular material to sinter. Preferably, the material thereby adheres to the layer on which it is sintered.

As used herein, the substantially flat temperature sensor element is designed to measure the temperature at the location where it is placed. Those elements are well known to those skilled in the art, and are preferably resistance elements consisting of materials with a high electrical resistance such as ruthenium oxide, platinum, gold, silver, nickel or palladium. Particularly useful sensors are between 0.01 µm and 10 µm, preferably between 0.8 µm and 1.2 µm, thick. An exemplary, commercially available sensor element is 1 µm thick and is available from companies producing thin film temperature sensors such as Heraeus Sensor Technology (Kleinostheim, Germany) or JUMO GmbH & Co. KG (Fulda, Germany). The elements have connectors for permanently or reversibly connecting the elements to wires leading to a controlling unit. The sensor element can be manufactured according to known methods (e.g., thin layer technology). It can be produced independently and thereafter fixed to the other components closely by known means, for example gluing. Preferably it is made by sputtering a layer of the material to the accompanying layer. Such methods to apply thin layers are also known. Preferred materials for the sensor element are nickel and platinum. Preferably, it is made from platinum or mixtures of platinum with other noble metals. In a preferred embodiment the sensor element has a bifilar structure. The temperature sensor basically consists of a long electrically resistive line. A bifilar structure in this connection means that the line is curved in such a way that two adjacent, substantially parallel parts of the line conduct the current in opposite directions. Hereby, the current in both directions should have the same intensity. The superposition of the two opposite magnetic fields around the two adjacent parts of the line is zero. Therefore, no magnetic field is emitted or absorbed.

Preferably, the temperature sensor element is protected against mechanical and chemical destruction by a cover layer. In addition, the cover layer has preferably a low electric conductivity and high thermal conductivity. This cover layer is preferably made from glass and is preferably between 1 µm and 25 µm thick. It is preferably produced by thick film technology. Therefore, the interaction of the sensor element of the device with the contact surface of the cartridge may be straight and direct between the material forming the sensor element and the material of the cartridge or may be indirect and oblique when the sensor element and/or the cartridge are covered with a cover layer.

The temperature sensor element is preferably designed to adequately correlate with the temperature in the sample. This can be achieved by designing the shape of the element such that it closely resembles the shape of the chamber containing the sample of the cartridge. Preferably, the contact surface of the sensor element, in particular embodiments including a protective cover layer, and the contact surface of the device are in close contact. Due to the defined arrangement of the cartridge and the device, the temperature in the sample can be extrapolated with high certainty and accuracy from the temperature measured in the sensor element. The result of the temperature measurement is used for controlling the heating and cooling process in an instrument comprising the cartridge and the device.

The device according to the invention further comprises a substantially flat, rigid, heat conducting substrate. This substrate is preferably construed from materials having a coefficient of thermal conductivity of between 2x10³ and 5x10⁶ W/m²K. Furthermore, said substrate is flat because it preferably has a thickness of less than 0.1 and 5 mm, more preferably between 0.25 and 2 mm. The substrate has the characteristic to be rigid, i.e. stable to substantial mechanical distortion. Furthermore, the heat conducting substrate is preferably made of an electrically isolating material having an electric conductivity of less than 0.1 Ω⁻¹m⁻¹. In addition, the substrate property preferably has a low thermal time constant (density x heat capacity / thermal conductivity), preferably of less than 10⁵ s/m². Appropriate materials are selected from the group comprising alumina, copper, aluminum oxide, aluminum nitride, silicon nitride, silicon carbide, sapphire, copper, silver, gold, molybdenum and brass. More preferred are materials with a low electric conductivity, e.g. electrically isolating materials, such as materials having an electric conductivity below 10⁻⁹ Ω⁻¹m⁻¹. Particularly useful materials are therefore ceramic materials, such as aluminum oxide, aluminum nitride, silicon nitride, silicon carbide and sapphire. This substrate can also be manufactured according to known methods. Preferably, the substrate is manufactured by sintering of ceramics. The substrate may be prepared in a form, preferably a re-useable form, resembling the shape of the substrate, or may be cleaved into pieces of appropriate extension after the sinter process.

The heat conducting substrate of the device according to the invention has the advantage of an increased flexibility for the design of the thermal behavior of the device. For example, the heat conducting substrate may be selected to either allow thermal isolation or thermal conduction and to influence electrical conductivity and/or mechanical stability. The latter is important considering the force to be applied to allow for a good thermal contact between the sensor element and the cartridge to be measured. Particularly, the heat conducting substrate may also be made of an electrically isolating material. In certain embodiments each sensor element is positioned on the surface of the heat conducting substrate pointing towards the contact surface of the cartridge. In other embodiments the device of the systems as described above the sensor elements may further function as heater elements. Herein, the sensor elements function as a combined sensor / heater element and are able to sense the temperature in a chamber and - with short delay - are able to apply heat to the chamber, when the temperature in the chamber is below the designated temperature. Preferably, such a combined sensor / heater element is made up of platinum or nickel. However, these combined sensor / heater elements commonly have a lower heating capacity compared to exclusive heater layers as described above as the thickness of a combined sensor / heater layer is thinner than a thick film heater, i.e. leading to a proportionally smaller cross-section and therefore a limited current density. At exceeded current the combined sensor / heater element line may break or strip off the substrate. Such embodiments are useful in applications where the temperature should remain substantially stable throughout the application (e.g., isothermal applications). Furthermore, these embodiments have the advantage that lateral thermal heat intensity distribution can be measured and congruently actively corrected more or less at the same time on the same area.

In a first embodiment of the invention the system for heating and cooling a mixture in a controlled manner comprises a cartridge and a device as described above. Herein, a sensor element is positioned on the surface of the device pointing towards the contact surface of the cartridge permitting the interaction of the cartridge body contact surface with the sensor element.

In another embodiment of the system according to the invention the sensor element is positioned on the surface of the device pointing towards the contact surface of the cartridge permitting the interaction of the chamber contact surface with the sensor element. In a particular embodiment the shape of the sensor element closely resembles the shape of the cartridge chamber containing the sample. This embodiment allows to measure the thermal image of the cartridge chamber with the sensor element of the device and to average the temperature across the interface between the cartridge chamber and the chamber contact surface of the device. Furthermore, this embodiment allows monitoring if the contact between the cartridge chamber and the chamber contact surface of the device extends the complete interface or if a part of the cartridge chamber has no physical contact with the chamber contact surface of the device.

In a particular embodiment of the system according to the invention the sensor element is positioned on the surface of the device in such a manner that the surface of the sensor element to its full extent contacts the cartridge within the chamber contact surface of said cartridge and the surface of the sensor element accounts for at least 10%, preferably at least 25%, more preferably at least 40% of the surface of the chamber contact surface.

In further embodiments, the surface of the sensor element in contact with the chamber contact surface may not be filled entirely with the sensor structure, but may also be formed as a ring or another shape suitable for imaging and averaging the temperature within the liquid depending on the laterally extended heat intensity distribution, the geometrical properties and mechanical rigidity or deformability of the chamber sealing. Herein, the surface of the sensor element is considered to be the upper part of the sensor element facing the cartridge and substantially causing the physical interaction with the cartridge when the device and the cartridge are in contact. Furthermore, the surface may be either formed by the material forming the sensor element or by a cover layer covering the sensor element. This embodiment allows measuring a large portion of the thermal image of the cartridge chamber with the sensor element of the device in order to obtain a representative average of the temperature across the interface between the cartridge chamber and the chamber contact surface of the device.

In another embodiment the device of the system comprises at least two sensor elements, wherein the first sensor element is positioned on the surface of the device permitting the interaction of the chamber contact surface with the first sensor element and the second substantially flat temperature sensor element is positioned on the surface of the device concurrently permitting the interaction of the cartridge body contact surface with said second sensor element. This embodiment has the advantage that the average temperature across the interface between the cartridge chamber and the chamber contact surface of the device can be determined even more precisely. In a particular embodiment the two sensors may be used to measure a laterally extended temperature gradient over the contact surface between cartridge and device. An advantage of such an embodiment is that laterally distributed heat intensity gradients at the contact surface can be monitored and temperature discrepancies of the liquid in the chamber can be compensated by taking into account the gradient leading to a more precise determination and retention of the temperature within the liquid.

In certain embodiments of the system according to the invention the cartridge may comprise more than one chamber for containing a mixture. In such a system the device also comprises more than one sensor element. Preferably, the sensor elements are positioned in such a manner that for each chamber of said device a first sensor element is positioned on the surface of said device pointing towards said contact surface of said cartridge permitting the interaction of the cartridge body contact surface or the chamber contact surface of the particular chamber with said first sensor element. Thus, in such an embodiment the device comprises one sensor element for each chamber of the cartridge. Furthermore, in certain embodiments the first sensor element for each chamber is positioned on the surface of said device permitting the interaction of the particular chamber contact surface with said first sensor element and a second substantially flat temperature sensor element is positioned on the surface of said device concurrently permitting the interaction of said cartridge body contact surface with said second sensor element. Herein, preferably said first sensor element may substantially resemble the shape of said particular chamber. The latter device may further be used to sense and heat more than one cartridge comprising one chamber each with one device. In all of these embodiments it is important that the defined interaction of the cartridge or the plurality of cartridges with the device is very accurate and precise in the predetermined position. Such embodiments of the system are useful for performing several reactions in distinct chambers in a controlled and monitored manner in parallel at the same time within the same system and may therefore be used for high throughput applications. Thus, the lateral heat flow can be monitored and compensated even if the device comprises several sensors or sensor pairs on the same heat conducting substrate either being in contact with one cartridge having several chambers or being in contact with several cartridges each having at least one chamber.

Within the system according to the invention the heater layer of the device preferably is made of the same material as the sensor elements or of materials which can be processed under similar fabrication conditions as the sensor elements. In particular, materials such as platinum, nickel or mixtures of platinum or nickel with other noble metals may be used. In certain embodiments the heater layer has a thickness of less than 30 µM. In a particular embodiment the heater and the sensor element may be positioned in the same layer. This embodiment has the advantage that the device containing the heater and the sensor element in the same layer may be produced with comparatively low complexity and effort. In such an embodiment the heater and the sensor element even though embedded in the same layer are two distinct and independent components attached to said layer.

The device according to the invention further comprises a heat conducting substrate. The sensor element is positioned on the surface of the heat conducting substrate pointing towards the contact surface of the cartridge. The heater may either be positioned on the same surface of the heat conducting substrate as the sensor element or in a preferred embodiment the heater is positioned on the opposite surface of the heat conducting substrate as the sensor element both embodiments with the sensor element pointing towards the contact surface of the cartridge. Hereby, the heater and/or the sensor element may either be attached to the heat conducting substrate by methods as described above or may be buried into the surface of the material forming the heat conducting substrate.

In a particular embodiment the sensor element may be used as a heater allowing to sense the temperature and subsequently to support the heater layer in applying heat to the mixture by a heating impulse, when the temperature is below the designated temperature. Furthermore, said first substantially flat sensor element and said heater layer may be merged in order to form one combined sensor / heater element. In such an embodiment the heater layer and the first substantially flat temperature sensor element are identical and thus, the combined heater / sensor element may be used for alternating heating and temperature sensing cycles. This embodiment is particularly useful when used in applications requiring only few heating operations, e.g. in isothermal applications particularly requiring a constant temperature retention, wherein the combined heater / sensor element senses the temperature in a chamber of the cartridge and may be used for short heating impulses when the temperature in the chamber is below the designated temperature.

In a preferred embodiment the system according to the invention is used for the amplification of nucleic acids in a sample.

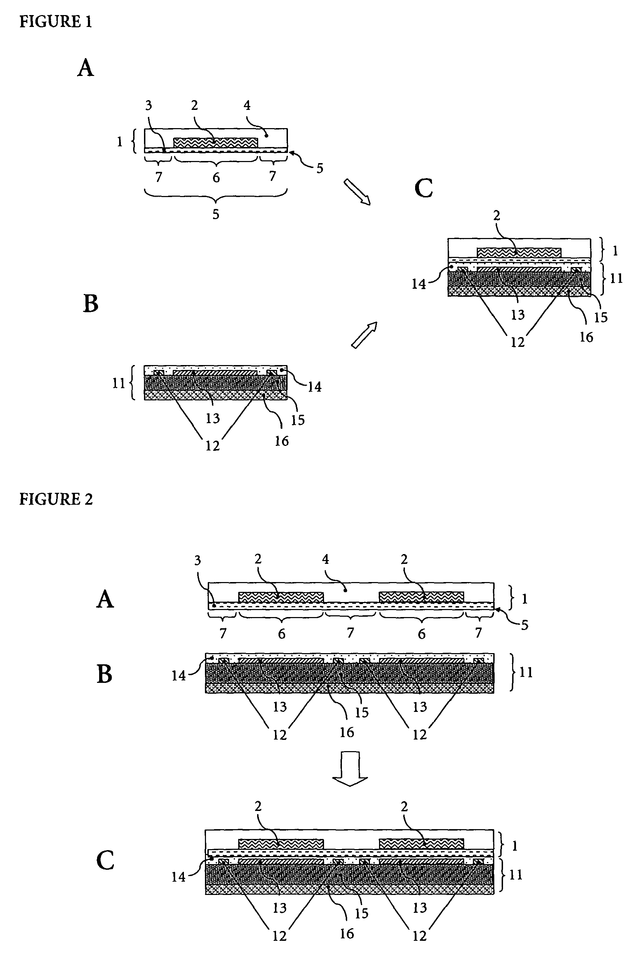

In Figure 1 cross sections through the essential components of an exemplary system according to the invention are shown. Figure 1A displays the cross section of a cartridge (1) having a chamber for containing a mixture (2) and a cartridge body (4). The cartridge further comprises a cover layer (3) covering the cartridge body and the chamber and having protective as well as heat conductive functions and a contact surface for contacting the device (5). The contact surface is made up from a chamber contact surface (6) and a cartridge body contact surface (7). Figure 1B displays the cross section of a device (11) comprising a first sensor element (12) and a second sensor element (13). The sensor elements are attached to a heat conducting substrate (15) and are protected by a cover layer for sensor elements (14). Furthermore, the device contains a heater layer (16) which is attached to the surface of the heat conducting substrate (15) and located at the opposite surface of the sensor elements (12, 13). Figure 1C shows the cross section through the system, when cartridge (1) and the device (11) are brought into a defined physical interaction. The contact of the cartridge (1) and the device (11) is established in such a way, that the first sensor element (12) interacts with the cartridge body contact surface (7) and that the second sensor element (13) to its full extent is positioned within the chamber contact surface (6). Figure 2 displays cross sections through the essential components of an exemplary system (C), wherein the cartridge (A) contains more than one cartridge chamber for containing a mixture (2) and the device (B) comprises a first sensor element (12) and a second sensor element (13) for each chamber of the cartridge. Figure 2A shows the cross section of a cartridge (1) having two chambers for containing a mixture (2) and a cartridge body (4). The cartridge further comprises a cover layer (3) covering the cartridge body and the chamber and having protective as well as heat conductive functions and a contact surface for contacting the device (5). The contact surface is made up from a chamber contact surface (6) for each particular chamber and a cartridge body contact surface (7). Figure 2B displays the cross section of a device (11) comprising a first sensor element (12) and a second sensor element (13) for each chamber of the cartridge. The sensor elements are attached to a heat conducting substrate (15) and are protected by a cover layer for sensor elements (14). Furthermore, the device contains a heater layer (16) which is attached to the surface of the heat conducting substrate (15) and located at the opposite surface of the sensor elements (12, 13). Figure 1C shows the cross section through the system, when cartridge (1) and the device (11) are brought into a defined physical interaction. The contact of the cartridge (1) and the device (11) is established in such a way, that each of the first sensor elements (12) interacts with the cartridge body contact surface (7) and that each second sensor element (13) to its full extent is positioned within the chamber contact surface (6) of each particular chamber.

Another embodiment according to the invention is a device for heating a cartridge comprising a chamber in a controlled manner comprises at least one substantially flat temperature sensor element located in parallel to a cross section of the cartridge chamber, a heat conducting substrate, and a heater layer. Herein, the sensor element is positioned on the surface of the heat conducting substrate pointing towards the chamber of the cartridge permitting the interaction of the cartridge with the sensor element. The heater layer may either be positioned on the same surface of the heat conducting substrate as the sensor element or in a preferred embodiment the heater is positioned on the opposite surface of the heat conducting substrate as the sensor element with the sensor element pointing towards the chamber of the cartridge. In a particular embodiment the sensor element substantially resembles the shape of the cross section of the cartridge chamber. This embodiment is advantageous as it allows to measure the thermal image of the cartridge chamber with the sensor element of the device when the sensor element is brought into physical contact with the cartridge chamber and to average the temperature across the interface between the cartridge chamber and the sensor element of the device. Furthermore, this embodiment allows to monitor if the contact between the cartridge chamber and the sensor element of the device extends the complete interface or if a part of the cartridge chamber has no physical contact with the sensor element of the device. In a particular embodiment of the device the sensor element extends along the cross section of the cartridge chamber for more than 10%, preferably more than 25%, more preferably more than 40% of the cross section. Thus, upon physical interaction of the sensor element and the cartridge chamber the surface of the sensor element interacts with at least 10%, preferably at least 25%, more preferably at least 40% of the surface of the cartridge chamber. In further embodiments, the surface of the sensor element in contact with the chamber contact surface may not be filled entirely with the sensor structure, but may also be formed as a ring or another shape suitable for imaging and averaging the temperature within the liquid depending on the laterally extended heat intensity distribution, the geometrical properties and mechanical rigidity or deformability of the chamber sealing. Thereby the contact may be directly between the material forming the sensor element and the material of the cartridge chamber or may be indirectly when the sensor element and/or the cartridge are covered with a cover layer. In further embodiments the sensor element has a bifilar structure and is between 0.01 µm and 10 µm, preferably between 0.8 µm and 1.2 µm, thick. The heat conducting substrate preferably has a thickness of between 0.1 mm and 5 mm and may be made of an electrically isolating material.

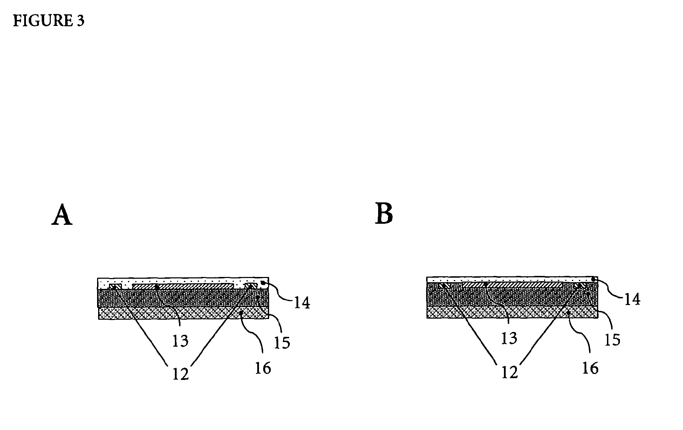

Figure 3 displays cross sections through two different exemplary embodiments of devices according to the invention. Figure 3A shows the cross section of a device comprising a first sensor element (12) and a second sensor element (13). The sensor elements are attached to a heat conducting substrate (15) and are protected by a cover layer for sensor elements (14). Furthermore, the device contains a heater layer (16) which is attached to the surface of the heat conducting substrate (15) and located at the opposite surface of the sensor elements (12, 13). Figure 3B shows a second embodiment of the device also comprising two sensor elements (12, 13). Unlike in the first embodiment the two sensor elements are buried into the surface of the material forming the heat conducting substrate (15). The two sensor elements (12, 13) are protected by a cover layer for sensor elements (14) and the heater layer (16) is attached to the surface of the heat conducting substrate (15) opposite the sensor elements.

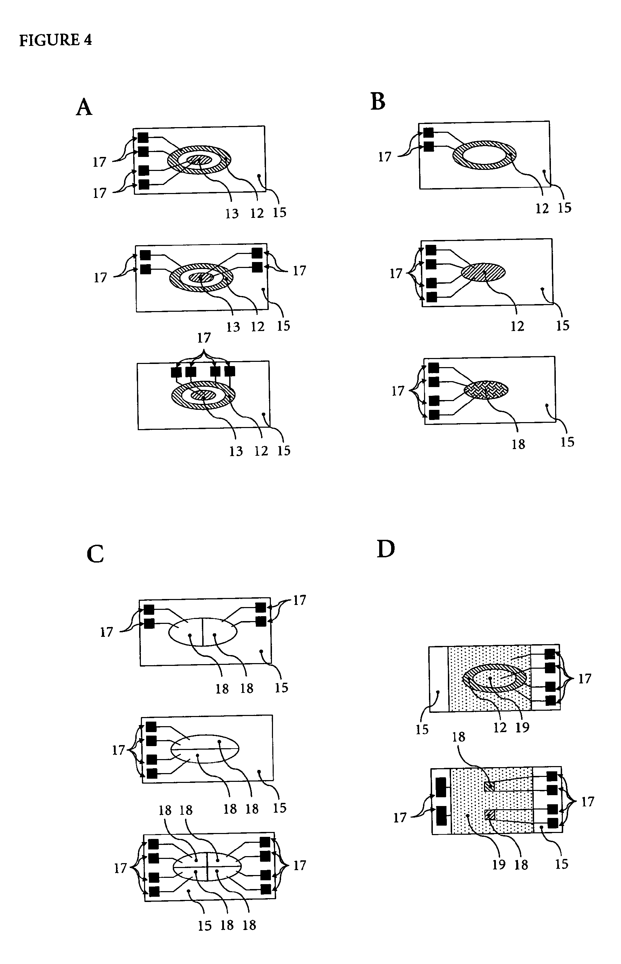

Figure 4 shows the top view of various exemplary embodiments of the device. In all displayed embodiments the sensor elements have connectors (17) for permanently or reversibly connecting the elements to wires leading to a controlling unit. In Figure 4A the device comprises a first sensor element (12) and a second sensor element (13) located on and attached to the heat conducting substrate as described above. The first sensor element (12) is positioned in such a manner to allow for a direct physical interaction of said first sensor element with the cartridge within the cartridge body contact surface and outside the chamber contact surface, while the second sensor element (13) is positioned is such a manner to allow for a direct physical interaction of said second sensor element within the chamber contact surface of the cartridge. The connectors (17) are shown in three different exemplary positions on the surface of the heat conducting substrate (15), but may be randomly distributed across said surface adapted to the spacial requirements of the instrument containing said device.

Figure 4B shows further embodiments of the device comprising only one sensor element. In the first picture of Figure 4B the device contains a first sensor element (12) positioned in such a manner to allow for a direct physical interaction of the sensor element with the cartridge body contact surface of the cartridge. In the second picture the device contains a first sensor element (12) positioned in such a manner to allow for a direct physical interaction of the first sensor element within the chamber contact surface of the cartridge. In a particular embodiment said first sensor element substantially resembles the shape of the cross section of the cartridge chamber. In the third picture the cartridge contains two sensor elements (18) that function as one sensor element but may be controlled and operated independently. Both sensor elements (18) are positioned in such a manner to allow for a direct physical interaction within the chamber contact surface of the cartridge. The latter embodiment is advantageous as of the redundancy of the sensor elements. Thus, if one of the sensor elements fails to work the temperature may still be sensed with the second sensor element. This embodiment is preferred in applications with high demands on accuracy of the temperature. Furthermore, one of the sensor elements may be used as a sensor element while the second sensor element may function as a heater.

Figure 4C displays embodiments of the device, wherein the first sensor element, which is positioned in such a manner to allow for a direct physical interaction of the first sensor element within the chamber contact surface of the cartridge, is made up of two or more sensor elements (18) that may be controlled and operated independently. Again this embodiment has the advantage of redundancy of the sensor elements. Thus, if one of the sensor elements fails to work the temperature may still be sensed with the other sensor elements. Furthermore, one of the sensor elements may be used as a heater while the other sensor elements may function as sensor elements.

The first picture of Figure 4D displays an embodiment of the device comprising a first sensor (12) element positioned in such a manner to allow for a direct physical interaction of the first sensor element with the cartridge within the cartridge body contact surface and outside the chamber contact surface and further comprising a combined sensor / heater element (19). This embodiment is useful in applications were several heating cycles with large differences in temperature are performed and wherein the heater layer is not sufficient to perform the heating in an appropriate time. Herein, the combined sensor / heater element may function as support and back up. In a particular embodiment the combined sensor / heater element (19) is the heater layer of the device. This embodiment is useful in applications where only little differences in temperature have to be applied (e.g. isothermal applications). In the second picture of Figure 4D an embodiment of the device is shown, wherein the first sensor element is made up from two or more independent sensor elements.

Another embodiment of the invention is a method for conducting and controlling a thermal profile in a system comprising
- heating a cartridge containing a mixture in a chamber with a device in a system according to the invention, and
- controlling the heating process and the temperature of said mixture using said first and/or second sensor element of said device.

A thermal profile is a sequence of temperatures to be reached in the mixture. Preferably, all temperatures of said profile are located above room temperature, more preferred between 37 and 98°C, most preferred between 40 and 96°C. The profile may be a rising profile, wherein the temperatures are raised over time, or may be a descending profile, wherein the temperatures are lowered over time. Most preferred is a profile having maximum and minimum temperatures, i.e. with temperatures rising and dropping. In the most preferred embodiment of the invention, said thermal profile contains repeated thermocycles, as needed for PCR. Those thermocycles will include a maximum temperature allowing denaturation of double stranded nucleic acids into single strands and a minimum temperature allowing annealing of single stranded nucleic acids to double strands. In a further embodiment the thermal profile may be a rising profile, wherein the temperature is raised over time and will be held constant for a defined period of time at one or more defined temperature plateaus. Such an embodiment may for example be used for the melting and denaturation of DNA duplexes or multiplexes by the application of heat and the determination of DNA melting curves. In another embodiment the thermal profile may be a constant profile, wherein the temperature will be held constant for a defined period of time at one or more defined temperature plateaus. This embodiment may be used for isothermal applications, e.g. rolling circle amplifications with polymerases such as Phi29.

Controlling the heating process and the temperature of the mixture contained in the cartridge chamber to ensure performance of a temperature profile, preferably of repeated temperature cycles as useful for thermocycling, e.g. in PCR using the sensor element preferably comprises
- measuring the temperature of said mixture in said chamber of said cartridge using said first and/or second sensor element of said device,
- comparing the temperature measured with the designated temperature intended to be reached in said mixture, and
- applying heat to the mixture through the heater layer to either raise the temperature, if the temperature of the mixture is lower than the designated temperature or maintain the temperature in said mixture, if the temperature of the mixture is the same as the designated temperature.

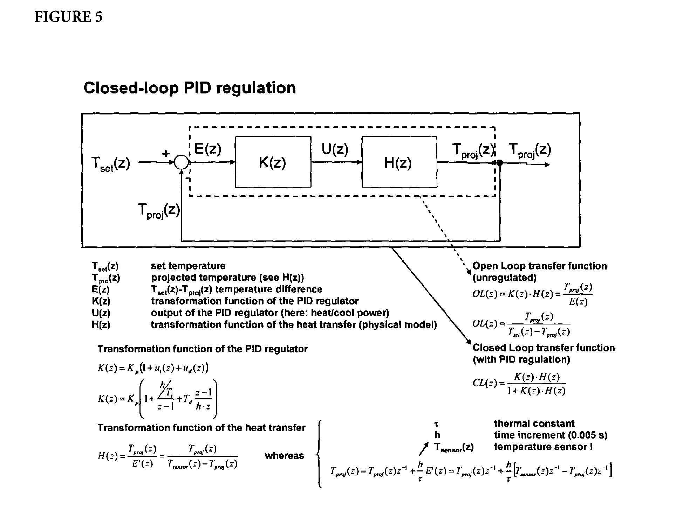

In a very preferred mode, therefore, the present invention comprises controlling and regulating the heating process by a computer program dependent upon the temperature of the liquid. The unit used for controlling the heater and performing the comparison of the temperature measured with the designated temperature and the application of heat to the mixture is called the heat control unit. Herein the heat control unit at least consists of an actor/active input to the system, i.e. heater/cooler, a sensor, i.e. temperature sensor element, and a closed-loop algorithm, e.g. PID, to regulate the temperature to the designated level. The algorithms needed to compare the temperature measured with the designated temperature are rather incomplex and straightforward. Thus, PID (proportional, integral, derivative) control algorithms known in the art incorporating formulas to describe the physical interaction between the device and the liquid in the chamber of the cartridge can be used for the closed loop regulation. Such a closed-loop PID regulation with z-transform equations is exemplified in Figure 5, wherein 'h' is the time interval, e.g. 5 ms, 10 ms, 20 ms, 50 ms , 100 ms, 'Ti' is the integration time constant for the PID regulator 'K(z)' and 'Td' is the derivation time constant for the PID regulator. Within the formula of the PID regulator, K(z), 'Kp' is a proportional factor term, 'ui(z)=(h/Ti)/(z-1)' is an integration term and 'ud(z)=Td*(z-1)/(h*z)' is a derivation term. The z-transform equation is an equation in the frequency domain describing a discrete function in the frequency domain. The Laplace transformation is used to convert the analogous equation from the time domain into the corresponding analogous function in the frequency domain.

The software preferably used in an analytical instrument according to the invention reads out signals, e.g. a temperature sensor signal, in a defined time interval and, thus, can only deal with discrete temporal information. Therefore, the continuous analogous function in the frequency domain has to be transformed into a discrete form in the frequency domain. The resulting function (the discrete form in the frequency domain) itself can then easily be transformed back to a discrete recursive function in the time domain.

This allows to examine the stability of the regulator, K(z), in combination with the physical interaction of the thermal cycler and the liquid in the chamber, H(z), in the z-transform in a closed loop function CL(z). Furthermore, the resulting function in the discrete time domain is a recursive function. Combined with the PID regulator the recursive form is highly preferred for an algorithm (see also "Control Systems Engineering (3rd edition)", Norman S. Nise, John Wiley and Sons Inc). Thus, having a fixed time interval for the read-out of the temperature sensors the heating/cooling power of the heater layer can be determined.

The temperature of the liquid in the cartridge chamber can be determined using the measured data of the sensor element when it physically contacts the contact surface of the cartridge and considering defined parameters describing the physical interaction of the cartridge and the device. To control the designated temperature profile in the liquid over time the PID control algorithm will set the required heating/cooling power for the heater element to achieve the default temperature at the desired point in time taking into account the designated temperature and the measured temperature of the most recently measured time interval as described above. In an embodiment comprising two sensor elements the sensor element in contact with the chamber contact surface will sense the temperature in a known manner, i.e. proportionally to the designed lateral temperature intensity distribution over the whole contact surface in respect to the sensor element in contact with the cartridge contact surface. If a lower temperature than expected is measured at the sensor element in contact with the chamber contact surface the mechanical contact between the device and the chamber contact surface of the cartridge is considered to be insufficient. Beyond that if a lower temperature than expected is measured at the sensor element in contact with the cartridge body contact surface the mechanical contact between the device and the cartridge is considered to be inappropriate. Thus, an analytical instrument comprising such a system could edit an error message leading to an increased reliability of analytical results at an early stage of the measurement. On the other hand if both temperatures measured with the two sensor elements correlate to each other and are within the expected range the mechanical contact is considered to be within working conditions. Hence, in an embodiment comprising two sensor elements the measured temperature resolution is twice as high as with only one sensor element and therefore the risk of undesired aberrations of the temperature within the liquid is lowered significantly. Thus, such a system provides for an internal control of the mechanical contact and leads to more reliable results which is particularly important for *in vitro* diagnostic applications.

Furthermore, as the sensor element is particularly flat the measurement of the temperature is very quick and does not need extensive electronics.

The heat can be applied through the heater in any known manner, e.g. by continuously applying electric current to the resistance heater or introducing said heat in pulses of electric current or using alternative current. Details of the length of said pulses or the amount of electric current needed for achieving a particular increase in temperature can be determined in simple experiments by determining the temperature in an exemplary sample and varying the amount of current and / or the length of the pulses at a given cooling capacity.

Preferably, said heating is done by contact heating. Contact heating is heating wherein the hot medium contacts the material to be heated, such that energy can flow through the contact surface between them from the heating medium to the material. The heating layer according to this invention preferably is a resistive heater. Resistance heating uses the effect that the resistance of small diameter wires upon current flow leads to a loss of energy by heat. A preferred design is a heating coil with a defined resistance for resistive heating. The coil can be formed by a wire or it can be designed in another way e.g. on a printed circuit board or as conductor of any kind of material on a substrate like ceramic or polyimide. One other option is that the coil is formed by thin- or thick film technology on a suitable substrate. The coil can be located below, on top or at the sides of the receptacle or even surround the cartridge in a way that the cartridge is inside the coil depending on the design of the coil.

Preferably, the method according to the invention further comprises cooling said cartridge. Preferably, said cooling is made by subjecting the system, more preferably a cooling element comprised in the system to a stream of a fluid, preferably a gas (e.g. air) for fins structures or an embedded heat-pipe. Cooling elements have the purpose to efficiently lead off heat from the system, particularly the device. Therefore, a cooling element is preferably made from good thermal conductors, such as ceramic compounds or metals, e.g. aluminum, in the form of a block with a large surface to enhance flow of thermal energy into the environment. The surface can be enlarged by providing fins to a block of metal (passive cooling), optionally increasing convection around the cooling element by a fan (active cooling). Instead of fins, liquid (e.g. water) cooling can be used or an embedded (in the metal block) heat-pipe with fins at the other end can be used.

In another embodiment of the invention provides a method for amplification of nucleic acids using a system according to the invention comprising
- providing a sample containing the nucleic acids in the chamber of said cartridge
- subjecting said sample in said chamber of said cartridge to thermocycles.

Another embodiment of the invention is an instrument for performing biological assays including heating a sample in a controlled manner at least comprising a system according to the invention, wherein said device is positioned within the instrument in such a manner to permit a defined and predetermined physical interaction with said cartridge, when said cartridge is inserted into the instrument and brought into contact with said device. The instrument may further comprise an excitation unit and a detection unit for analyzing the sample contained in the cartridge and subjected to heating operations as well as reagents and consumables for conducting the determination, and optionally may be automated by inclusion of robotics for handling the cartridge and / or the sample. In the instrument, the cartridge and the device are brought into physical contact in a defined manner in order to ensure a proper and predetermined physical interaction of the cartridge and the device. Thereby, the sensor element of the device is positioned in such a way to contact the cartridge within the contact surface either within the chamber contact surface or within the cartridge body contact surface.

In a further embodiment the system according to the invention is used for conducting and monitoring a thermal gradient profile on the cartridge.

### Examples

### Example 1

### Manufacturing a device according to the invention

In a first step two thin film temperature sensor elements made from platinum and available from the company Heraeus are coated on a ceramic wafer made from aluminum oxide available from the company CeramTec AG (Plochingen, Germany). As used herein, it is made from aluminum oxide, has a thickness of 635 µm and is protected by a protection layer made from glass ceramics (thickness 20 µm). This step is performed on a coating machine.

In a second manufacturing step the thick film heater is constructed on the opposite side of the wafer. For this, a film of ruthenium oxide (thickness 20 µm) is coated on the opposite side. The thick film layer is also protected by a protection layer also made from glass ceramics (thickness 20 µm). Once the substrate is at least coated with the thin film layer it can be processed in a further step, which defines the thickness of an isolation layer and therefore the thermodynamic behavior. By screen printing methods known in the art the isolation layer is deposited in a defined shape onto the protection layer of the heater via a solution of epoxy glue available from the company Epoxy Technology Inc.(Billerica, MA, USA) resulting in a thickness of 100 µm. Furthermore, a cooling block is affixed onto the isolation layer. The cooling block is contacted with the still viscous multi compound isolation layer with thermal glueing properties. In a final sinter step at the temperature of 180 °C the cooling block is stuck onto the heater layer side with a defined thickness of the isolation layer.

### Example 2

### Conducting a PCR and monitoring the temperature in the liquid within the cartridge chamber using the system according to the invention

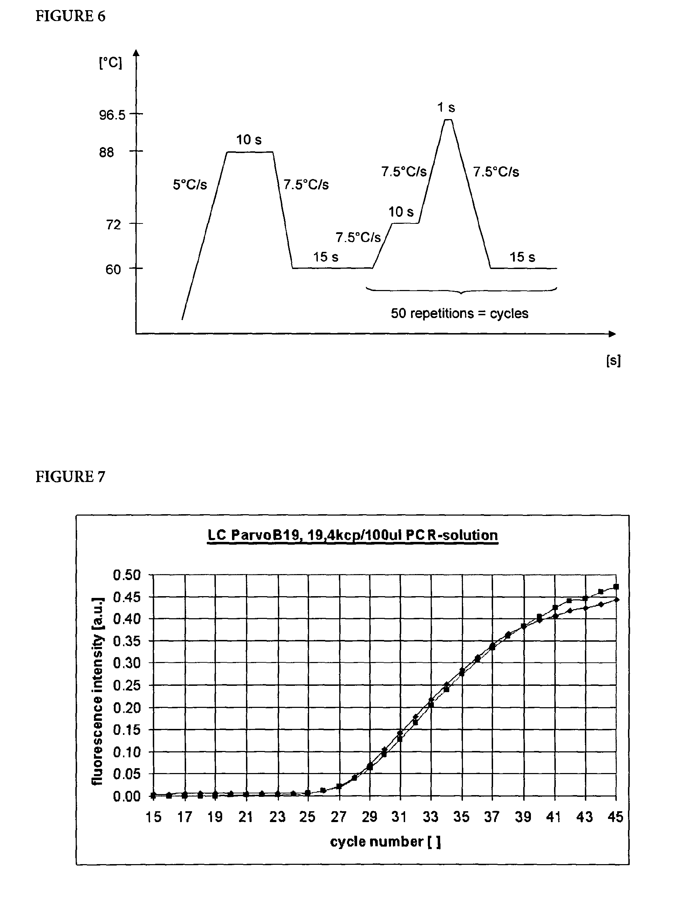

Using the thermal cycler described in example 1, several PCR runs were performed with the commercially available LightCycler ParvoB19 Kit (Cat No 3 246 809, Roche Diagnostics GmbH, Germany) for real-time PCR detection, following the instructions of the manufacturer provided in the kit and using LightCycler Parvo B19 Standard as the template. The temperature profile as shown in Fig 6 was set to generate the PCR curve. The temperature slopes were chosen in such a way that the PCR efficiency is still good, whereas the thermal cycler could manage much faster slopes, e.g. 20 °C/s.

The results in graphic form - measured on a breadboard with the described thermal cycler using the described temperature sensors and using a breadboard real-time fluorescence photometer capable of exciting and measuring the fluorescent substances described in the LightCycler ParvoB19 Kit (Roche Diagnostics GmbH, Germany) for two experiments are shown in Fig 7.

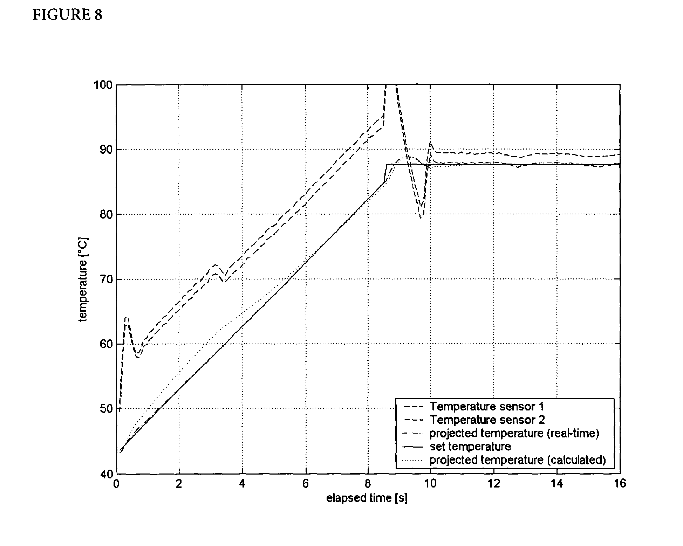

In Fig 8 an example for all required temperatures for the PID (Proportional Integral Derivative) temperature regulation algorithm (as displayed in Fig 5) is shown for a section of one particular cycle (see first cycle in Fig 6). The two temperature sensors, the set temperature and the real-time projected temperature calculated on the instrument are depicted. The temperatures measured by the two sensor elements show the comparable deviations from the set temperature indicating that the thermal contact between chamber contact surface and sensor contact surface was within acceptable working conditions. The real-time projected temperature in the chamber containing the liquid was verified after the record of all temperatures by recalculating the projected temperature. The real-time projected temperature and the recalculated projected temperature matched well, i.e. the regulation algorithm worked correctly.

### Reference numerals

- 1: cartridge
- 2: chamber for containing a mixture
- 3: cover layer of cartridge
- 4: cartridge body
- 5: contact surface for contacting the device
- 6: chamber contact surface
- 7: cartridge body contact surface
- 11: device
- 12: first sensor element
- 13: second sensor element
- 14: cover layer for sensor elements
- 15: heat conducting substrate
- 16: heater layer
- 17: connector
- 18: sensor element
- 19: combined sensor / heater element

## Claims

1. A system for heating and cooling a mixture in a controlled manner comprising a cartridge and a device,
said cartridge at least comprising
- a chamber for containing said mixture, and
- a contact surface for contacting said device having a chamber contact surface and a cartridge body contact surface
and said device at least comprising
- a first substantially flat temperature sensor element,
- a heater layer, and
- a heat conducting substrate
**characterized in that** said sensor element is positioned on the surface of said device pointing towards said contact surface of said cartridge permitting the interaction of said cartridge body contact surface or said chamber contact surface with said first sensor element.

2. The system according to claim 1, wherein said first sensor element is positioned on the surface of said device permitting the interaction of said chamber contact surface with said first sensor element and a second substantially flat temperature sensor element is positioned on the surface of said device concurrently permitting the interaction of said cartridge body contact surface with said second sensor element.

3. The system according to any one of claims 1 and 2, wherein said first sensor element is positioned on the surface of said device permitting the interaction of said chamber contact surface with said first sensor element and wherein said first sensor element substantially resembles the shape of said chamber.

4. The system according to any one of claim 1 to 3, wherein said first sensor element is positioned on the surface of said device permitting the interaction of said first sensor element with said chamber contact surface, wherein the surface of said first sensor element to its full extent contacts said cartridge within said chamber contact surface and wherein the surface of said first sensor element accounts for at least 10% of the surface of said chamber contact surface.

5. The system according to any one of claim 1 to 4, wherein said first and/or second sensor element has a bifilar structure.

6. The system according to any one of claim 1 to 5, wherein said first and/or second sensor element is positioned on the surface of said heat conducting substrate pointing towards said chamber contact surface of said cartridge.

7. The system according to any one of claims 1 to 6, wherein said first and/or second sensor element also functions as a heater element.

8. The system according to any one of claims 1 to 7, wherein any of said sensor elements comprises a resistance element and a cover layer, said cover layer protecting said resistance element from direct contact with the environment and having a thickness of less than 25 µM.

9. The system according to any one of claims 1 to 8, wherein said sensor element is between 0.01 µm and 10 µm, preferably between 0.8 µm and 1.2 µm, thick.

10. The system according to any one of claims 1 to 9, wherein said heat conducting substrate has a thickness of between 5 mm and 0.1 mm.

11. The system according to any one of claims 1 to 10, wherein said heat conducting substrate is made of an electrically isolating material.

12. The system according to any one of claims 1 to 11, wherein said heater has a thickness of less than 30 µM and is positioned on the opposite surface of the heat conducting substrate as said sensor element with the sensor element pointing towards the contact surface of the cartridge.

13. The system according to any one of claims 1 to 11, wherein said first substantially flat sensor element and said heater layer are merged to form one combined sensor / heater element.

14. The system according to any one of claims 1 to 11, wherein the first sensor element which is positioned in such a manner to allow for a direct physical interaction of the first sensor element within the chamber contact surface of the cartridge is made up of two or more sensor elements that may be controlled and operated independently.

15. A device for heating a cartridge comprising a chamber in a controlled manner, said device comprising
- at least one substantially flat temperature sensor element located in parallel to a cross section of said chamber,
- a heat conducting substrate, and
- a heater layer,
**characterized in that** said sensor element is positioned on the surface of said heat conducting substrate pointing towards said chamber of said cartridge permitting the interaction of said cartridge with said first sensor element.

16. The device according to claim 15, wherein said sensor element substantially resembles the shape of said cross section of said chamber.

17. The device according to any one of claims 15 and 16, wherein said sensor element extends along said cross section for more than 10% of said cross section.

18. The device according to any one of claims 15 to 17, wherein said sensor element has a bifilar structure.

19. The device according to any one of claims 15 to 18, wherein said sensor element is between 0.01 µm and 10 µm, preferably between 0.8 µm and 1.2 µm, thick.

20. The device, according to any one of claims 15 to 19, wherein said substrate has a thickness of between 5 mm and 0.1 mm.

21. The device according to any one of claims 15 to 20, wherein said heat conducting substrate is made of an electrically isolating material.

22. A method for conducting and controlling a thermal profile in a system comprising
- heating a cartridge containing a mixture in a chamber with a device in a system according to any one of claims 1 to 14, and
- controlling the heating process and the temperature of said mixture using said first and/or second sensor element of said device.

23. The method according to claim 22, wherein controlling the heating process and the temperature of said mixture using the sensor element comprises
- measuring the temperature of said mixture in said chamber of said cartridge using said first and/or second sensor element of said device,
- comparing the temperature measured with the designated temperature intended to be reached in said mixture, and
- applying heat to the mixture through the heater layer to either raise the temperature, if the temperature of the mixture is lower than the designated temperature or maintain the temperature in said mixture, if the temperature of the mixture is the same as the designated temperature.

24. The method according to claim 23, wherein the comparison of the temperature measured with the designated temperature and the application of heat to the mixture is conducted by a heat control unit.

25. The method according to any of claims 22 to 24 further comprising cooling said cartridge.

26. The method according to claim 25, wherein said cooling is made by subjecting said system to a stream of a fluid, said fluid being a liquid or a gas.

27. The method according to any of claims 22 to 26, wherein said thermal profile contains repeated thermocycles.

28. A method for amplification of nucleic acids using a system according to any one of claims 1 to 14 comprising
a) providing a sample containing the nucleic acids in the chamber of said cartridge
b) subjecting said sample in said chamber of said cartridge to thermocycles.

29. An instrument for performing biological assays including heating a sample in a controlled manner at least comprising a system according to any one of claims 1 to 14, wherein said device is positioned within the instrument in such a manner to permit a defined and predetermined physical interaction with said cartridge, when said cartridge is inserted into the instrument and brought into contact with said device.

30. The use of a system according to any one of claims 1 to 14 for conducting a thermal profile in a device.

31. The use of a system according to any one of claims 1 and 14 for the amplification of nucleic acids in a sample.
